# EUROPÄISCHE PATENTSCHRIFT

(11) **EP 1 308 333 B1**
(45) Veröffentlichungstag und Bekanntmachung des Hinweises auf die Patenterteilung: **26.11.2008**
(21) Anmeldenummer: 02022842.5
(22) Anmeldetag: 14.10.2002
(51) Int. Cl.: B60J 7/14

(54) **Ablegbares Fahrzeugdach für ein Cabriolet**
Storable roof for convertible vehicle
Toit escamotable pour véhicule convertible

(30) Priorität: 12.10.2001 DE 10150219
(43) Veröffentlichungstag der Anmeldung: 07.05.2003
(73) Patentinhaber: Webasto AG, 82131 Stockdorf (DE)
(72) Erfinder: Reinsch, Burkhard, 87600 Kaufbeuren (DE)
(74) Vertreter: Konnerth, Dieter Hans

(56) Entgegenhaltungen:
- WO-A-01/40007
- DE-A- 10 108 493
- DE-C- 19 934 673

## Beschreibung

Die Erfindung betrifft ein Fahrzeugdach mit den Merkmalen des Oberbegriffs des Anspruchs 1.

Aus der DE 199 62 070 A1 ist ein Fahrzeugdach bekannt geworden, bei dem das vordere Dachteil mittels eines Viergelenks an dem mittleren Dachteil eines dreiteiligen Daches schwenkbar angelenkt ist Die beiden Lenker des Viergelenks sind an einem über das mittlere Dachteil weit nach vorne hinausstehenden Tragarm in nahe beieinander liegenden Gelenken schwenkbar gelagert. Die Anlenkung am Tragarm ist weit vor dem mittleren Dachteil angeordnet, damit die mit dem vorderen Dachteil zurückschwenkenden Lenker nicht mit dem mittleren Dachteil kollidieren. Nachteilig ist dabei, daß durch die nahe beieinander liegenden Gelenke nur eine vergleichsweise geringe Stabilität der Lagerung des vorderen Dachteils möglich ist.

Aus der DE 199 34 673 C1 ist ein Fahrzeugdach mit drei bewegbaren Dachteilen bekannt geworden, bei dem das mittlere Dachteil mittels eines Hauptviergelenks am Fahrzeug gelagert ist, das vordere Dachteil mittels eines Viergelenks am mittleren Dachteil gelagert ist und das hintere Dachteil am hinteren Hauptlenker des Hauptviergelenks befestigt und mit diesem verschwenkbar ist. Die Dachteile sind im Kofferraum des Fahrzeugs derart übereinander abgelegt, daß das hintere Dachteil mit seiner Unterseite nach oben zeigt, während darüber das vordere Dachteil in gleichbombierter Stellung über dem mittleren Dachteil abgelegt ist, so daß die Oberseiten nach oben weisen. Auch bei diesem Fahrzeugdach sind die Schwenklager der beiden Lenker des vorderen Viergelenks nahe beieinander an einem vom mittleren Dachteil nach vorne ragenden Tragarm mit entsprechenden Nachteilen für die Stabilität angeordnet.

Aus der WO 01 40007 A1 ist ein gattungsgemäßes Fahrzeugdach bekannt geworden, bei dem ein erstes vorderes Dachteil mittels einer Mehrgelenkeinrichtung an einem sich anschließenden zweiten Dachteil schwenkbar gelagert ist und beim Ablegen des Daches über das zweite Dachteil schwenkbar ist. Die Mehrgelenkeinrichtung enthält jeweils zwei Lenker, die seitlich außerhalb der Dachteile angeordnet sind, so daß beim Verschwenken des ersten Dachteils über das zweite Dachteil eine Kollision der Lenker mit dem zweiten Dachteil vermieden wird.

Die DE 101 08 493 A1 offenbart ein Fahrzeugdach, bei dem ebenfalls ein erstes vorderes Dachteil mittels einer Mehrgelenkeinrichtung an einem sich anschließenden zweiten Dachteil schwenkbar gelagert ist und beim Ablegen des Daches über das zweite Dachteil schwenkbar ist. Die Mehrgelenkeinrichtung ist an einem vom zweiten Dachteil nach vorne ragenden Tragarm deutlich vor dem zweiten Dachteil angeordnet, so daß deren Lenker beim Verschwenken des ersten Dachteils über das zweite Dachteil mit diesem nicht kollidieren.

Der Erfindung liegt die Aufgabe zugrunde, ein eingangs genanntes Fahrzeugdach zu schaffen, das eine verbesserte Lagerung des ersten Dachteils am zweiten Dachteil aufweist.

Die Aufgabe wird bei dem oben genannten Fahrzeugdach erfindungsgemäß dadurch gelöst, daß der hintere Lenker in Schließstellung in einer sich nach oben öffnenden Vertiefung im zweiten Dachteil aufgenommen ist. Die Vertiefung ist beispielsweise ein Längskanal zwischen einem Dachmittelteil und einem Dachseitenteil.

Da bei dem erfindungsgemäßen Fahrzeugdach der hintere Lenker der Mehrgelenkeinrichtung am zweiten Dachteil um eine von dessen Vorderrand zurückversetzte Schwenkachse schwenkbar gelagert ist und beim Ablegen des Daches aus der Dachfläche des zweiten Dachteils nach oben ausschwenkt, wird durch die zurückversetzte Schwenkachse ein größerer Lagerabstand zwischen der Lagerung des hinteren Lenkers und eines vorderen Lenkers der Mehrgelenkeinrichtung am zweiten Dachteil erzielt, ohne daß dabei die Lagerung des vorderen Lenkers an einem Tragarm sehr weit vor der Dachfläche des zweiten Dachteils angeordnet werden muß, wobei wiederum der von der Erfindung behobene Nachteil auftreten würde, daß das zweite Dachteil durch diesen Tragarm übermäßig verlängert würde.

Vorteilhafte Ausgestaltungen der Erfindung sind in den Unteransprüchen angegeben.

Vorzugsweise ist der hintere Lenker in Schließstellung des Daches bündig zur Dachfläche des zweiten Dachtells oder unterhalb der Dachfläche angeordnet. Der Lenker kann auch in einer entsprechenden Erhöhung der Dachfläche integriert angeordnet sein. In jedem Fall tritt er ohne eine seitliche Bewegung aus der Dachfläche nach oben aus.

Um einen möglichst großen Schwenkwinkel zu schaffen, kann vorgesehen sein, daß der hintere Lenker in zurückgeschwenkter Offenstellung zumindest teilweise in den Hinterabschnitt der Vertiefung abgesenkt ist. Damit kann das erste Dachteil unmittelbar auf das zweite Dachteil abgesenkt werden.

Um das optische Erscheinungsbild des Fahrzeugdaches in Schließstellung des Daches zu verbessern, ist zweckmäßigerweise vorgesehen, daß eine Blende den Hinterabschnitt der Vertiefung vom hinteren Lenker nach hinten hin abdeckt. Die Blende kann vom zurückschwenkenden Lenker in die Vertiefung herabgedrückt werden.

Gemäß einer bevorzugten Gestaltung der Erfindung ist vorgesehen, daß ein vorderer lenker der Mehrgelenkeinrichtung mittels eines Gelenksschwenkbar gelagert ist, das an einem am zweiten Dachteil nach vorne vorstehenden Tragarm vor der Dachfläche des zweiten Dachteils angeordnet ist, und daß der vordere Lenker Ober ein Hebelgetriebe angetrieben ist. Das Hebelgetriebe gestattet auch bei einem großen Schwenkwinkel des vorderen Lenkers eine Einleitung der Antriebskraft, so daß Totpunktstellungen in den beiden Endstellungen der Schwenkbewegung vermieden werden können und auch in der Nähe der Endstellungen ein größerer Hebelarm zur Krafteinleitung verfügbar ist.

Vorzugsweise ist das Hebelgetriebe mit einem Hauptschwenkantrieb zum Ablegen des Daches zwangsgekoppelt, so daß kein eigener zusätzlicher Antrieb vorgesehen werden muß. Andererseits kann es auch einen eigenen Antrieb aufweisen, so daß die Bewegung des Hebelgetriebes eigenständig gesteuert werden kann.

Gemäß einer bevorzugten Ausgestaltung ist vorgesehen, daß der vordere Lenker über eine Antriebsstange und ein zwischengeschaltetes Hebelgetriebe angetrieben ist, das einen am zweiten Dachteil um eine fixe Schwenkachse schwenkbaren Anlenkhebel in einer solchen Anordnung aufweist, daß ein größerer Antriebshebelarm bei gleichbleibender oder reduzierter Antriebsbewegung der Antriebsstange bereitgestellt ist. Des weiteren ist es zweckmäßig, wenn der vordere Lenker über eine Antriebsstange und ein zwischengeschaltetes Hebelgetriebe angetrieben ist, das einen am zweiten Dachteil um eine fixe Schwenkachse schwenkbaren Anlenkhebel aufweist, an dem die Antriebsstange angelenkt ist, wobei die fixe Schwenkachse des Anlenkhebels derart angeordnet ist, daß zumindest in einer der beiden Endlagen der Schwenkbewegung des vorderen Lenkers der bezogen auf die Antriebsstange seitliche Abstand der Schwenkachse vom Anlenkpunkt der Antriebsstange am Anlenkhebel größer ist wie der seitliche Abstand des Gelenks des vorderen Lenkers vom Anlenkpunkt der Antriebsstange am Anlenkhebel.

Die genannten Einrichtungen sind sowohl bei Hardtop-Fahrzeugdächern mit zwei Dachteilen wie auch mit drei oder mehreren Dachteilen verwendbar.

Vorzugsweise sind drei Dachteile vorgesehen, das zweite oder mittlere Dachteil ist über eine Mehrgelenkeinrichtung an der Karosserie schwenkbar gelagert und das dritte oder hintere Dachteil ist über eine Mehrgelenkeinrichtung an dem zweiten oder mittleren Dachteil oder dessen karosserieseitiger Lagerung schwenkbar gelagert.

Nachfolgend wird das Fahrzeugdach anhand von Ausführungsbeispielen unter Bezugnahme auf die Zeichnung näher erläutert. Es zeigt:
- Fig. 1: in einer Seitenansicht in schematischer Teildarstellung ein Cabriolet mit einem Hardtop-Fahrzeugdach mit einem vorderen, einem mittleren und einem hinteren Dachteil in geschlossener Stellung;
- Fig. 2 bis 7: in einer jeweiligen Seitenansicht in schematischer Darstellung die drei Dachteile beim Ablegen des Hardtop-Fahrzeugdaches in unterschiedlichen Stellungen;
- Fig. 8: in einer Seitenansicht in vergrößerter Darstellung das vordere Dachteil beim Hochschwenken über das mittlere Dachteil;
- Fig. 9: in einer Seitenansicht in schematischer Teildarstellung eine Lenkerverbindung eines Viergelenks zwischen dem vorderen Dachteil und dem mittleren Dachteil;
- Fig. 10 bis 12: in jeweiligen schematischen Seitenansichten den hinteren Lenker des Viergelenks beim Verschwenken des vorderen Dachteils auf das hintere Dachteil;
- Fig. 13: in einer perspektivischen Draufsicht auf das Dach das vordere Dachteil beim Hochschwenken über das mittlere Dachteil;
- Fig. 14: in einer vergrößerten Ausschnittsdarstellung aus Fig. 3 ein Hebelgetriebe für den vorderen Lenker des vorderen Viergelenks;
- Fig. 15: in einer perspektivischen Draufsicht in schematischer Darstellung das Hebelgetriebe mit den benachbarten Dachteilen;
- Fig. 16: in einer Seitenansicht in gegenüber Fig. 1 vergrößerter Darstellung das hinter Dachteil in Schließstellung;
- Fig. 17: in einer Seitenansicht in vergrößerter Darstellung entsprechend Fig. 5 die Lagerung des mittleren und des hinteren Dachteils;
- Fig. 18: in einer Seitenansicht in schematischer Teildarstellung ein weiteres Ausführungsbeispiel eines Hardtop-Fahrzeugdaches mit einem vorderen, einem mittleren und einem hinteren Dachteil in geschlossener Stellung; und
- Fig. 19: in einer Seitenansicht in vergrößerter Ausschnittsdarstellung das in Fig. 18 dargestellte Fahrzeug in einer Zwischenöffnungsstellung.

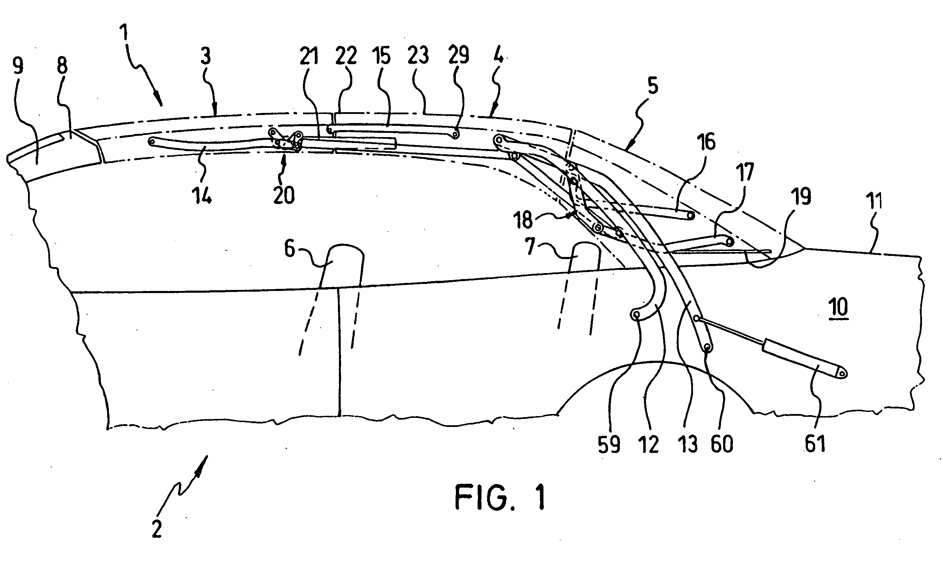

Ein Fahrzeugdach 1 eines nicht näher dargestellten Cabriolets 2 ist als zu öffnendes Hardtop mit einem vorderen Dachteil 3, einem mittleren Dachteil 4 und einem hinteren Dachteil 5 gestaltet (siehe Fig. 1). Das Cabriolet 2 kann eine Sitzreihe oder gemäß Fig. 1 eine vordere und eine hintere Sitzreihe 6 bzw. 7 aufweisen, so daß die Längen der einzelnen Dachteile 3, 4, 5 an die jeweilige Länge des Fahrzeuginnenraumes angepaßt sind. Beim Öffnen und Ablegen des Fahrzeugdachs 1 werden, nachdem des vordere Dachteil 3 von einem Windlauf 8 oder von den A-Säulen 9 abgekoppelt worden sind, das vordere Dachteil 3, das mittlere Dachteil 4 und das hintere Dachteil 5 in einen Dachablageraum oder Verdeckkasten 10 abgelegt, der hinter der hinteren Sitzreihe 7 im Heckbereich des Cabriolets 2 angeordnet und von einer Verdeck- oder Kofferraumklappe 11 abdeckbar ist.

Die drei Dachteile 3, 4, 5 sind über in den Figuren dargestellte Lagerungen schwenkbar gelagert, die jeweils beidseits an den Dachteilen vorgesehen sind. Das mittlere Dachteil 4 ist mittels einem einen Hauptlenker 12 und eine Hauptsäule 13 aufweisenden Hauptviergelenk an der Karosserie derart schwenkbar gelagert, daß es im Verdeckkasten 10 mit seiner Oberseite nach oben weisend abgelegt ist. Das vordere Dachteil 3 ist mittels eines Viergelenks, das einen vorderen Lenker 14 und einen hinteren Lenker 15 enthält, am mittleren Dachteil 4 schwenkbar gelagert und schwenkt beim Ablegen gleichbombiert, d. h. ebenfalls mit nach oben weisender Oberseite auf das mittlere Dachteil 4. Das hintere Dachteil 5 oder Heckelement, das z. B. eine Heckscheibe enthält, ist mittels eines vorderen Hebels 16 und eines hinteren Hebels 17 in Viergelenkanordnung an einem Lagerarm 18 schwenkbar gelagert, der am mittleren Dachteil 4 angebracht ist und über dessen Hinterende nach hinten hinaussteht.

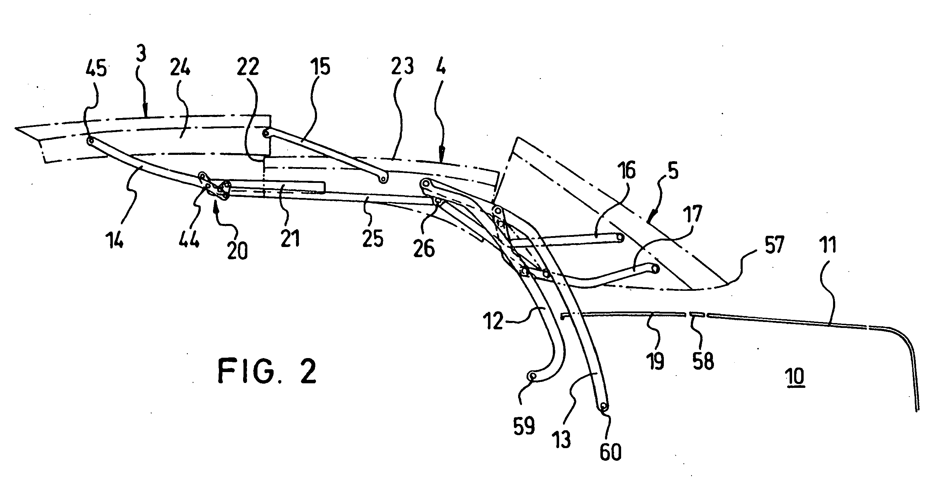

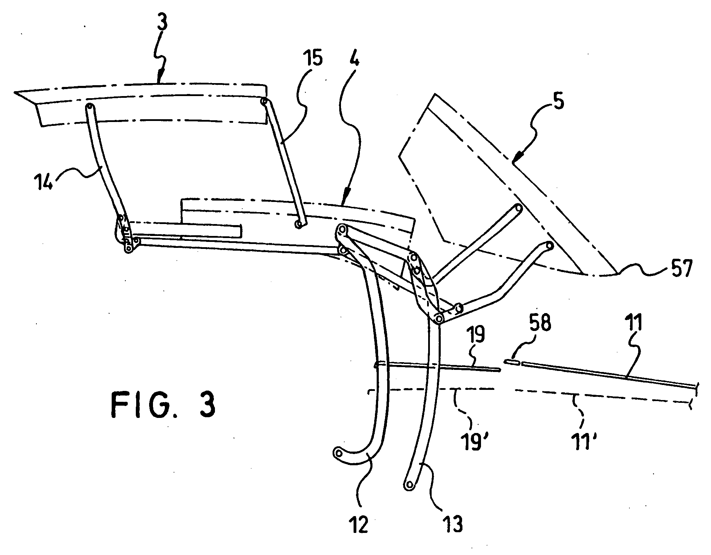

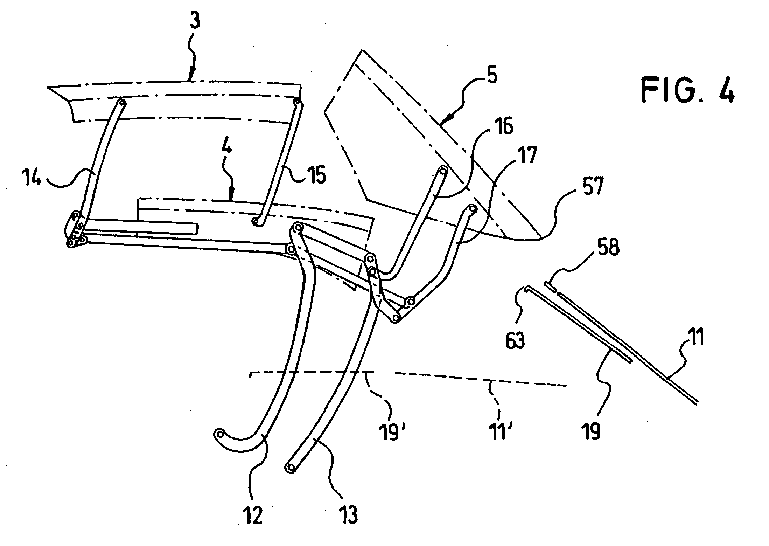

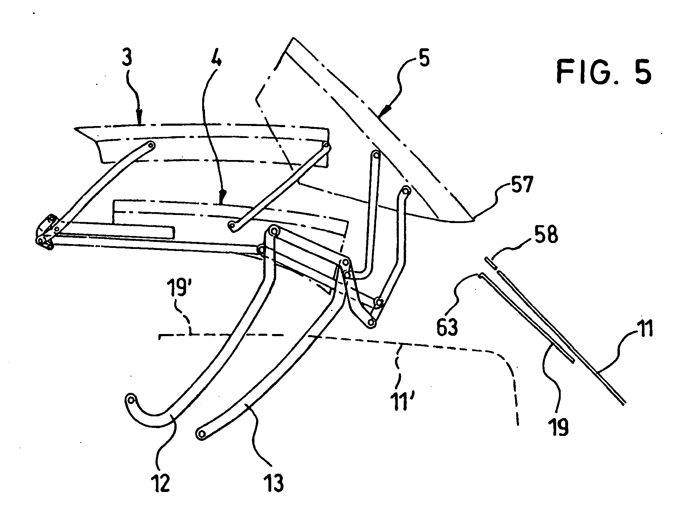

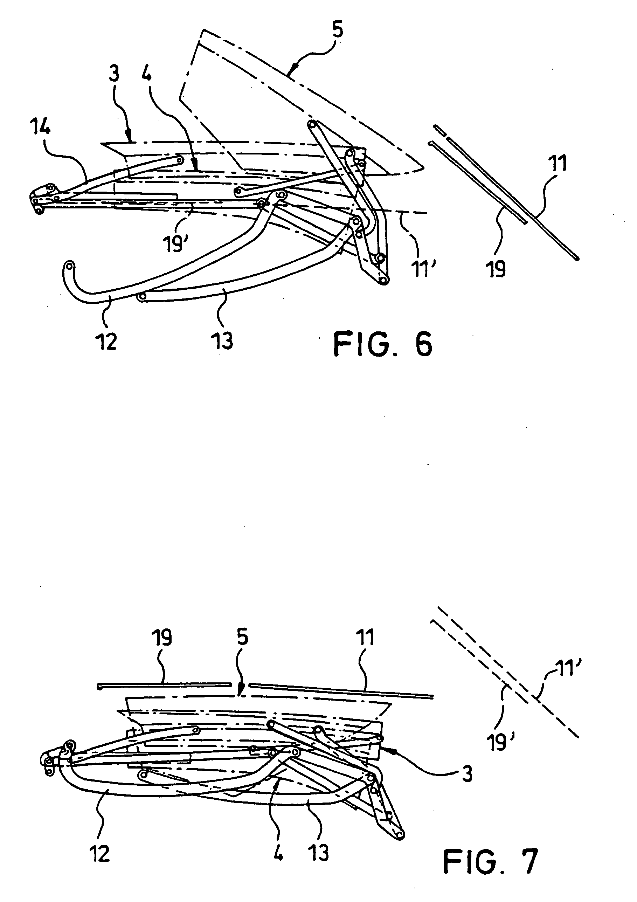

Beim Ablegen des Hardtop-Daches 1 schwenkt das vordere Dachteil 3 auf das mittlere Dachteil 4 und das hintere Dachteil 5 auf das vordere Dachteil 3. Diese kompakte gleichbombierte Einheit schwenkt dann in den Verdeckkasten 10. Die Ablagebewegung wird durch Verschwenken des Hauptviergelenks 12, 13 bewirkt, das beispielsweise über eine kinematische Zwangskopplung auch das vordere Viergelenk 14, 15 und das hintere Viergelenk 16, 17 verschwenkt. Die Ablagebewegung der drei Dachteile 3, 4, 5 erfolgt kontinuierlich (siehe Fig. 2 bis 7). Beim Ablegen des Daches 1 wird die Verdeckkastenklappe 11 mit einer daran gelagerten Hutablage 19 angehoben (siehe Fig. 3, mit 11' und 19' sind die Ruhelage der Verdeckkastenklappe bzw. der Hutablage bezeichnet) und mit ihrer Vorderkante 58 in die Offenstellung hochgeschwenkt (Fig. 4), während die Hutablage 19, die an der Verdeckkastenklappe 11 bewegbar gelagert ist, nach hinten unter die Verdeckkastenklappe 11 verschoben wird. Das weitere Verschwenken des Hauptviergelenks 12, 13 senkt das vordere Dachteil 3 auf das mittlere Dachteil 4 und verschwenkt das hintere Dachteil 5 auf das vordere und das mittlere Dachteil 3 bzw. 4 (Fig. 5 und 6), bis alle drei Dachteile 3, 4, 5 in gleichgerichteter Stapelanordnung vollständig in den Verdeckkasten 10 abgesenkt sind, woraufhin die Verdeckkastenklappe 11 wieder herabschwenkt und die Hutablage 19 nach vorne ausfährt und schließlich ihre Abdeckstellung einnimmt (Fig. 7).

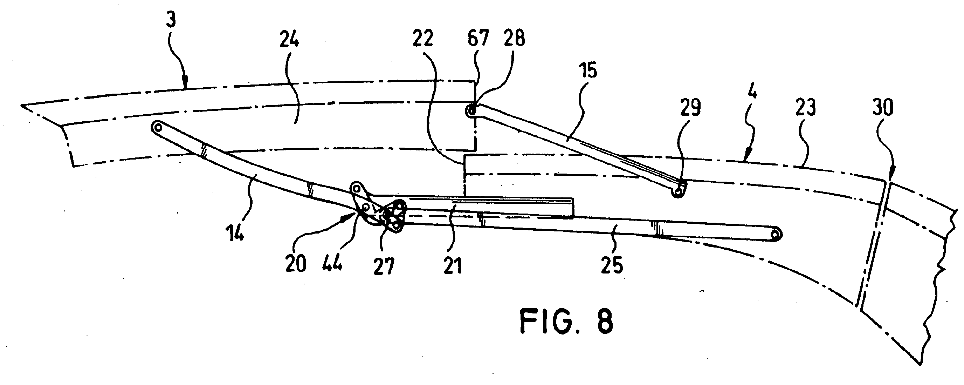

Der vordere Lenker 14 des das vordere Dachteil 3 lagernden vorderen Viergelenks ist mittels eines Hebelgetriebes 20 am Vorderende eines Tragarms 21 schwenkbar gelagert (siehe insbesondere Fig. 8), der am mittleren Dachteil 4 angebracht ist und sich nach vorne über den Vorderrand 22 der Dachschale 23 des mittleren Dachteils 4 hinaus in einer derartigen Anordnung erstreckt, daß er in Schließstellung vom Seitenbereich 24 des vorderen Dachteils 3 abgedeckt ist. Eine vordere Antriebs- oder Koppelstange 25 zum Verschwenken des vorderen Lenkers 14 ist mittels eines hinteren Gelenks 26 am Hauptlenker 12 und mittels eines vorderen Gelenks 27 am Hebelgetriebe 20 angelenkt.

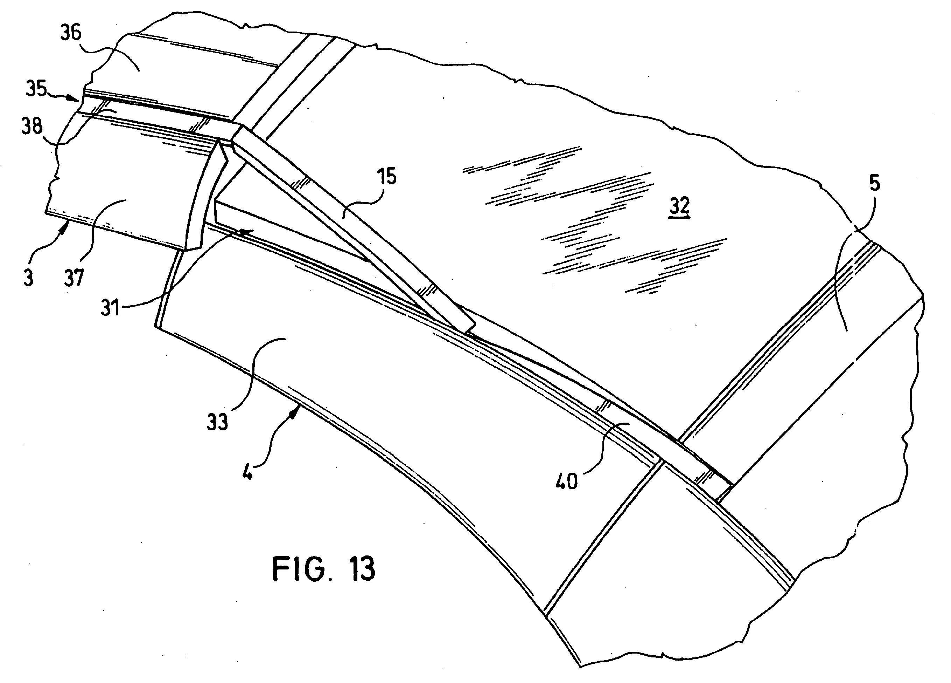

Das Vorderende des hinteren Lenkers 15 ist mittels eines Gelenks 28 am Hinterende 67 des vorderen Dachteils 3 schwenkbar angelenkt. Das Hinterende des hinteren Lenkers 15 ist mittels eines Gelenks 29 schwenkbar gelagert, das am mittleren Dachteil 4 in etwa mittig zwischen dem Vorderrand 22 und dem Hinterrand 30 der Dachschale 23 angeordnet und gegenüber der Oberfläche der Dachschale 23 abgesenkt ist, so daß der hintere Lenker 15 in Schließstellung des Daches 1 in einer Vertiefung 31 in der Art einer Längsnut oder eines Längskanals aufgenommen ist, die sich zwischen dem Mittelabschnitt 32 und dem Seitenabschnitt 33 (siehe Fig. 13) des mittleren Dachteils 4 über dessen Länge erstreckt. Die Vertiefung 31 ist beispielsweise ein sogenannter Schweißgraben, in dem die beiden herabgebogenen und aneinander angrenzenden Seitenränder des Mittelabschnitts 32 bzw. des Seitenabschnitts 33 z. B. durch Schweißen miteinander verbunden sind.

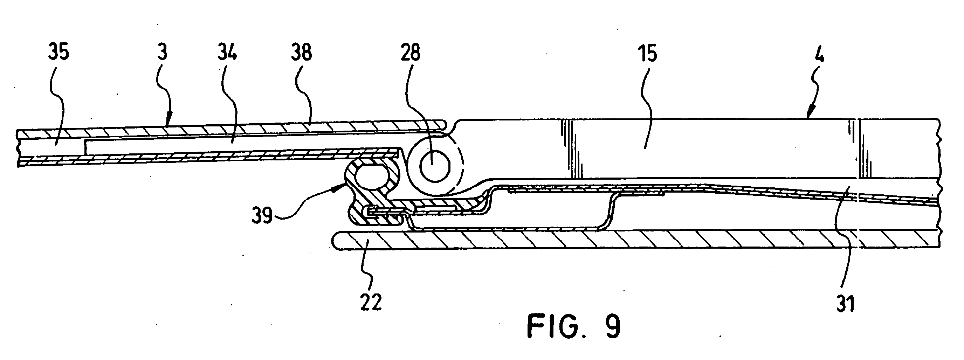

Das vordere Gelenk 28 des hinteren Lenkers 15 ist an einem länglichen Lagerteil 34 angebracht (Fig. 9), das in einer beispielsweise ebenfalls von einem Schweißgraben gebildeten Vertiefung 35 zwischen dem Mittelabschnitt 36 und dem Seitenabschnitt 37 des vorderen Dachteils 3 (Fig. 13) aufgenommen und daran befestigt ist. Eine Blende 38 oder Abdeckung deckt die Vertiefung 35 mit dem darin aufgenommenen Lagerteil 34 bündig mit der Oberfläche des vorderen Dachteils 3 ab.

Der Schweißgraben bzw. die Vertiefung 31 am mittleren Dachteil 4 bildet einen Naßbereich, der durch eine am Vorderrand 22 des mittleren Dachteils 4 angebrachte Dichtung 39 nach vorne begrenzt wird. In Schließstellung des Daches 1 liegt die Dichtung 39 an der Unterseite des vorderen Dachteils 3 dicht an.

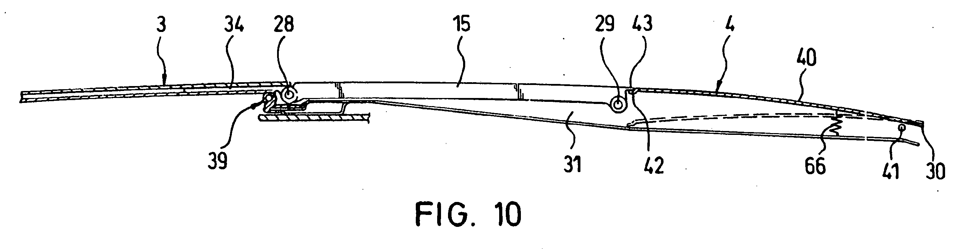

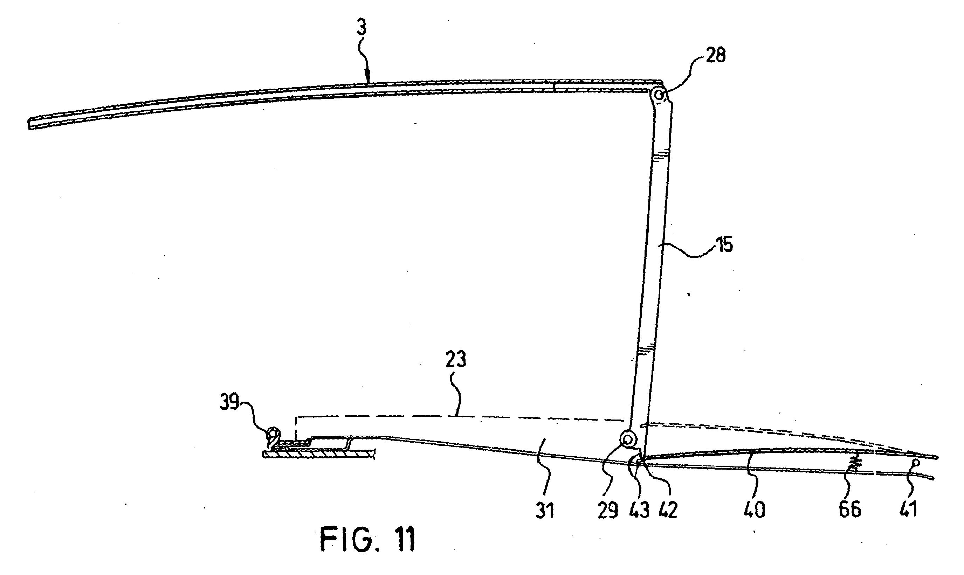

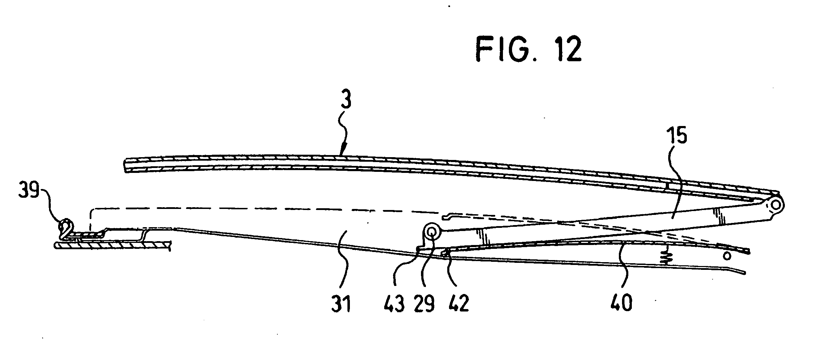

Eine Blende 40 (Fig. 10) deckt den hinteren Abschnitt der Vertiefung 31 zwischen dem Gelenk 29 am Hinterende des hinteren Lenkers 15 und dem Hinterrand 30 der Dachschale 23 ab. Die Blende 40 ist um eine hintere Drehachse 41 schwenkbar gelagert und durch eine Vorspanneinrichtung, beispielsweise eine Feder 66, nach oben in ihre Abdeckstellung vorgespannt, in der sie zur Oberseite der Dachschale 23 bündig angeordnet ist und mit ihrem abgesenkten Vorderende 42 von unten an einer Nase 43 am Hinterende des hinteren Lenkers 15 anliegt. Wenn der hintere Lenker 15 um das Gelenk 29 nach hinten verschwenkt wird, drückt die Nase 43 das Vorderende 42 der Blende 40 herab (Fig. 11 und 12), so daß sich der nach hinten verschwenkende hintere Lenker 15 in die Vertiefung 31 absenken kann und dabei die Blende 40 herabdrückt. Beim Schließen des Daches 1 hebt sich der hintere Lenker 15 aus der Vertiefung 31 und seine Nase 43 führt die Blende 40 in ihre Abdeckstellung.

Durch den vergleichsweise großen Lagerabstand zwischen dem hinteren Gelenk 29 des hinteren Lenkers 15 und einem hinteren Gelenk 44 des vorderen Lenkers 14, an dem dieser an dem Tragarm 21 schwenkbar gelagert ist, wie auch zwischen dem vorderen Gelenk 28 des hinteren Lenkers 15 und einem vorderen Gelenk 45 des vorderen Lenkers 14, das die Anlenkung am vorderen Dachteil 3 bildet, wird eine Viergelenk mit einer großen Stützbasis gebildet, die eine stabile Lagerung des vorderen Dachteils 3 ermöglicht.

Der hintere Lenker 15 ist derart gestaltet, daß er in Schließstellung des Daches 1 in seiner zur Dachoberfläche bündigen Anordnung die Vertiefung 31 optisch abdeckt, so daß eine Abdeckung für den vorderen Abschnitt der Vertiefung 31 nicht erforderlich ist.

Die Blende 40 kann in alternativer Gestaltung an ihrem Hinterende an der Vertiefung 31 des mittleren Dachteils 4 fest angebracht sein und z. B. aus Kunststoff mit einer gewissen Flexibilität gebildet sein, so daß sie sich flexibel herabbiegt, wenn sie an ihrem Vorderende 42 und durch flächige Auflage des Lenkers 15 herabgedrückt wird. Die Rückstellkraft wird durch das Kunststoffmaterial bereitgestellt.

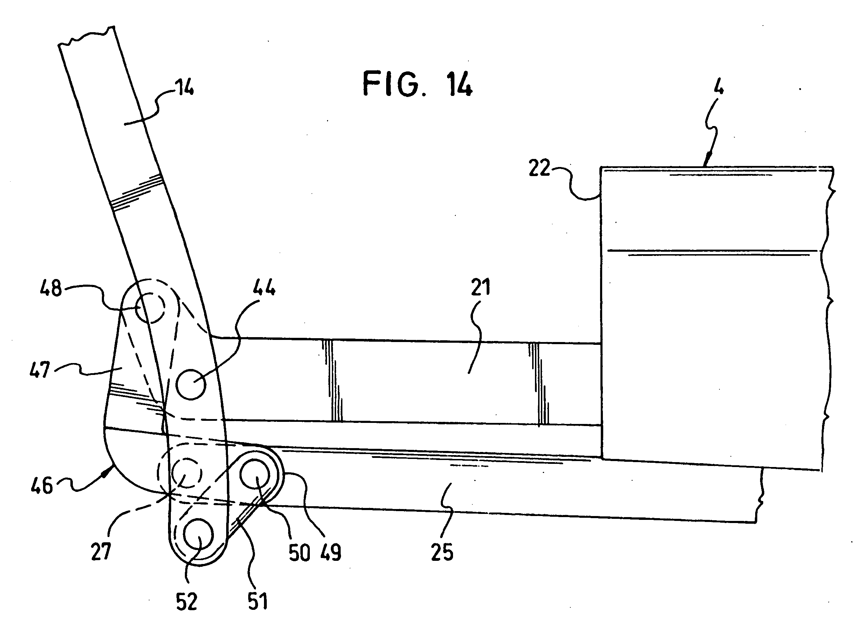

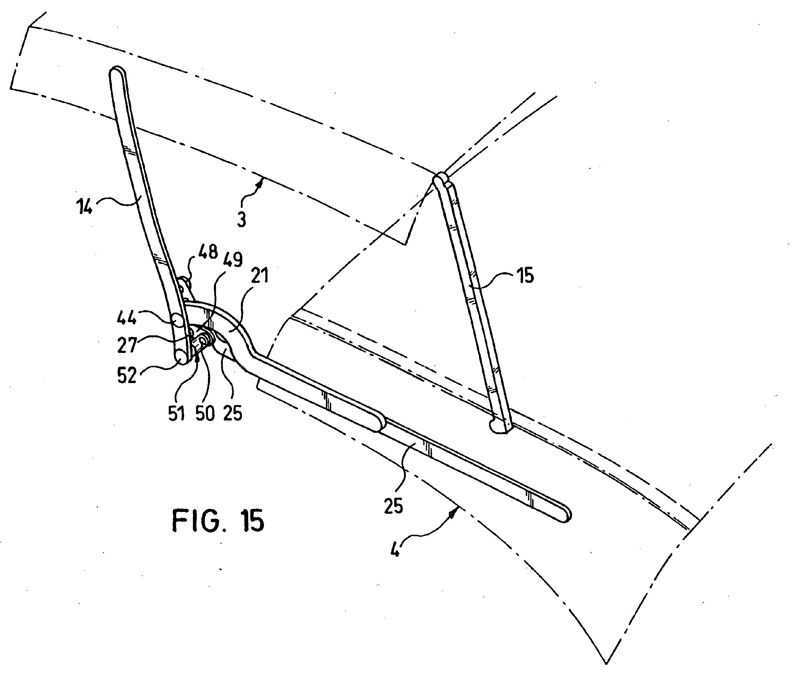

Das am Vorderende des Tragarms 21 angeordnete Hebelgetriebe 20 (siehe insbesondere Fig. 14 und 15) enthält einen beispielsweise rechtwinkligen Winkelhebel 46 mit einem ersten Schenkel 47, der endseitig am Vorderende des Tragarms 21 in einem Gelenk 48 schwenkbar gelagert ist, das oberhalb des den vorderen Lenker 14 lagernden Gelenks 44 angeordnet ist. An dem zweiten Schenkel 49 des Winkelhebels 46 ist die Koppelstange 25 in dem Gelenk 27 angelenkt, das vom Ende des zweiten Schenkels 49 zurückversetzt angeordnet ist. Am Ende des zweiten Schenkels 49 ist mittels eines Gelenks 50 ein kurzer Verbindungshebel 51 angelenkt, der andererseits mittels eines Gelenks 52 mit dem über das Gelenk 44 hinausstehenden Ende des vorderen Lenkers 14 schwenkbar verbunden ist.

Der Abstand zwischen dem Gelenk 27 und dem Gelenk 48 in zur Koppelstange 25 senkrechter Richtung bildet den wirksamen Schwenkarm für die Einleitung der Antriebskraft auf das Hebelgetriebe 20 und damit auf den vorderen Lenker 14. Durch die dargestellte Auslegung des kompakt gebauten Hebelgetriebes 20 ist der wirksame Schwenkarm stets ausreichend groß, so daß auch bei großem Schwenkwinkel des vorderen Lenkers 14 sowohl in Schließstellung wie auch in Offenstellung des Daches 1 die Koppelstange 25 von einer Totpunktstellung zum Hebelgetriebe 20 bzw. zum Gelenk 48 ausreichend weit entfernt ist.

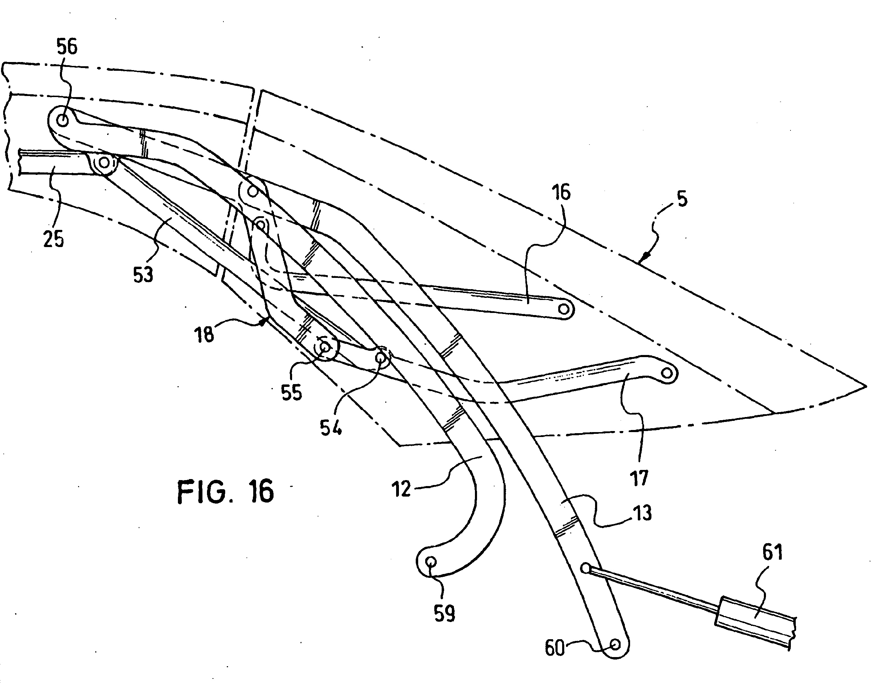

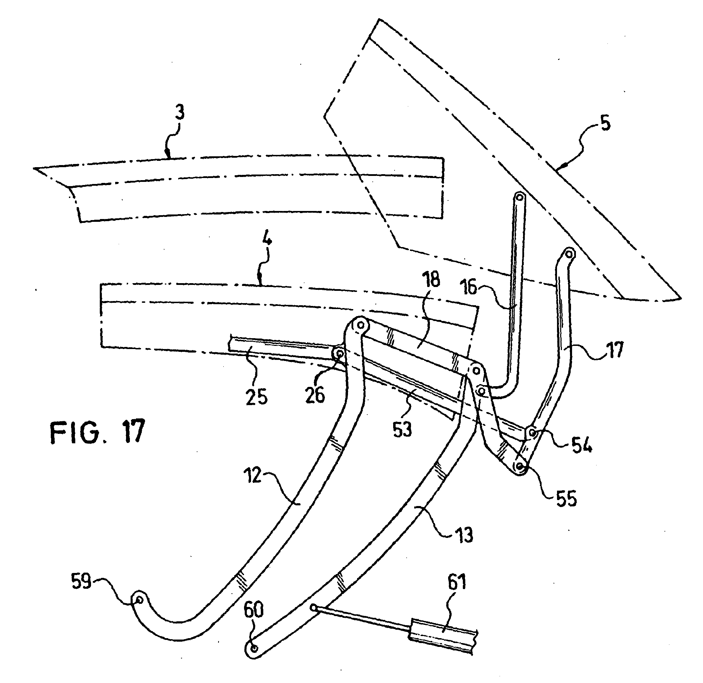

Der Antrieb zum Bewegen des hinteren Dachteils 5 (siehe insbesondere Fig. 16 und 17) enthält eine hintere Antriebsstange 53, die einerseits an dem am Hauptlenker 12 angebrachten Gelenk 26 und andererseits an einem Gelenk 54 angelenkt ist, das benachbart zu dem Gelenk 55 angeordnet ist, das den hinteren Hebel 17 des das hintere Dachteil 5 lagernden Viergelenks am Lagerarm 18 schwenkbar lagert. Beim Ablegen des Daches 1 wird der Hauptlenker 12 des Hauptviergelenks um sein Gelenk 56, mit dem er an dem Lagerarm 18 angelenkt ist, verschwenkt. Dabei wird die Schwenkbewegung des Gelenks 26 über die hintere Antriebsstange 53 und das Gelenk 54 auf den hinteren Hebel 17 übertragen. Entsprechend der Festlegung der Abstände zwischen den Gelenken 26 und 56 und den Gelenken 55 und 54 kann das Bewegungsverhalten des hinteren Hebels 17 in Abhängigkeit von der Bewegung des Hauptlenkers 12 eingestellt werden.

Über die Antriebsstange 25, die ebenfalls an dem Gelenk 26 angelenkt ist, wird gleichzeitig das vordere Dachteil 3 verschwenkt. Die Antriebsstange 25 entfällt, wenn das vordere Dachteil 3 einen eigenen Antrieb aufweist.

Durch die gekoppelte Zwangssteuerung der Bewegungen des vorderen Dachteils 3 und des hinteren Dachteils 5 während der Ablagebewegung des mittleren Dachteils 4 ist bei dem dargestellten Ausführungsbeispiel die beschriebene Verschiebung der Hutablage 19 nach hinten unter die Verdeckkastenklappe 11 erforderlich, so daß sich der Hinterrand 57 des hinteren Dachteils 5 bei der Ablagebewegung vor dem Vorderrand 58 der geöffneten Verdeckkastenklappe 11 absenken kann (siehe Fig. 4 bis 6).

Beim Schließen des Daches legt sich der eine Dichtung enthaltende Hinterrand 57 des hinteren Dachteils 5 in einfachem Bewegungsablauf von oben auf die schon geschlossene Verdeckkastenklappe 11 (Bewegung von Fig. 2 nach Fig. 1).

Der Schwenkantrieb des Hauptviergelenks um die karosseriefesten Gelenke 59 und 60 des Hauptlenkers 12 bzw. der Hauptsäule 13 erfolgt z. B. mittels einer hydraulisch betätigten Kolben-Zylinder-Einheit 61, die beispielsweise an der Hauptsäule 13 angreift.

In alternativer Gestaltung ist die Koppelstange 25 nicht mit dem Gelenk 26 verbunden, sondern mit einer eigenen Antriebseinrichtung, die über eine Steuereinrichtung für eine koordinierte Ablagebewegung gesteuert ist.

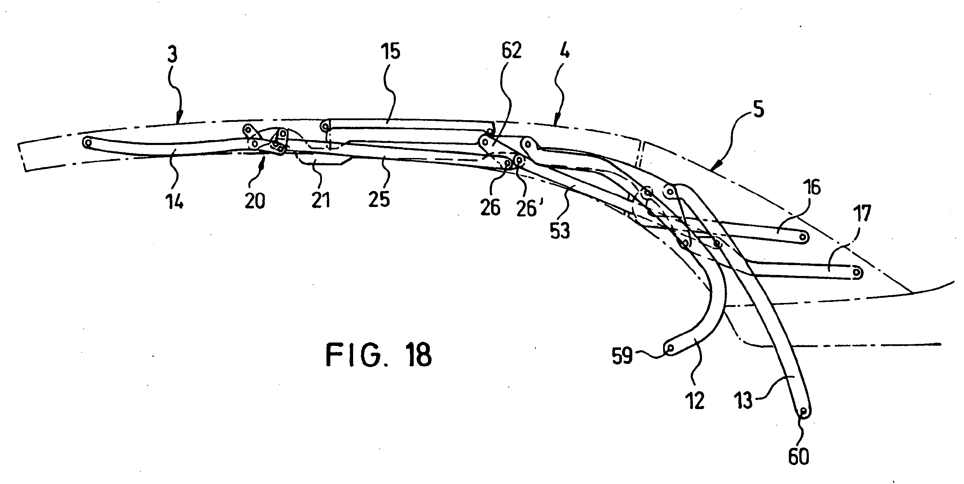

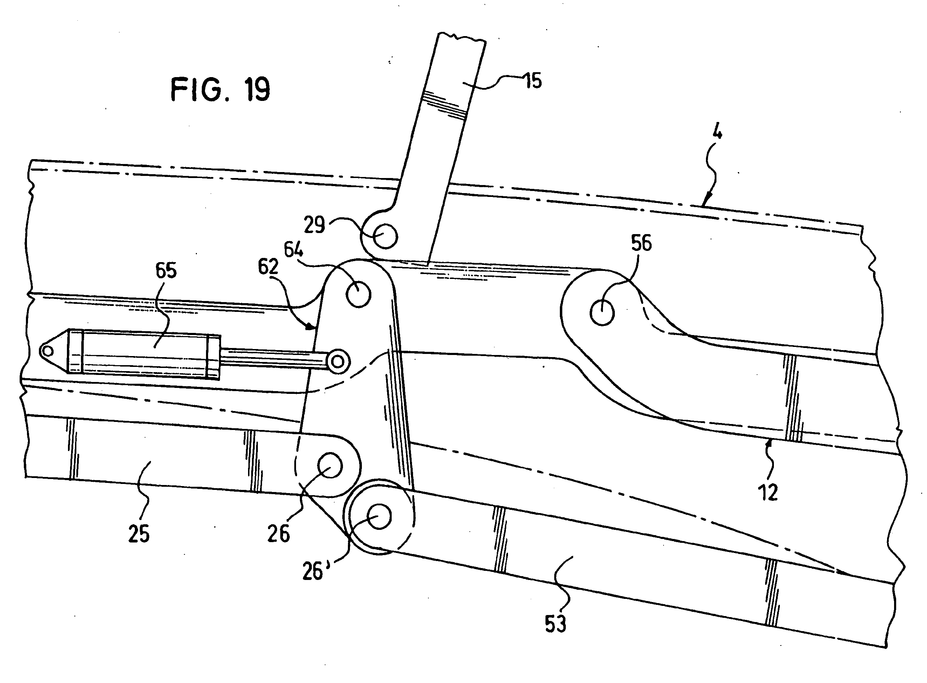

Eine weitere alternative Gestaltung sieht vor (siehe Fig. 18 und 19), daß die vordere Koppelstange 25 und die hintere Antriebsstange 53 in den Gelenken 26 und 26' miteinander verbunden sind, diese Gelenke 26 und 26' jedoch nicht an dem Hauptlenker 12 angebracht ist, sondern an einem Schwenkhebel 62, der mittels eines Gelenks 64 an dem mittleren Dachteil 4 gelagert ist. An diesem Schwenkhebel 62 greift eine Antriebseinrichtung 65 an, so daß die Bewegungen des vorderen Dachteils 3 und des hinteren Dachteils 5 gekoppelt ablaufen, jedoch durch die Steuerung der Antriebseinrichtung unabhängig von der Bewegung des Hauptviergelenks bzw. des mittleren Dachteils 4 einstellbar sind. Somit können beim Ablegen des Daches zunächst das vordere Dachteil 3 auf das mittlere Dachteil 4 und das hintere Dachteil 5 auf das mittlere Dachteil 4 bzw. auf das darüber angeordnete vordere Dachteil 3 verschwenkt werden, bevor das mittlere Dachteil 4 mit der kompakt angeordneten Einheit der drei Dachteile nach hinten in den Verdeckkasten 10 abgesenkt wird. Hierbei kann die Hutablage 19 als feste Einheit mit der Verdeckkastenklappe 11 gebildet sein, da die Verdeckkastenklappe 11 erst dann geöffnet wird, wenn das hintere Dachteil 5 über das mittlere Dachteil 4 geschwenkt worden ist und somit der Hinterrand 57 des hinteren Dachteils 5 problemlos vor dem Vorderrand 63 der Hutablage 19 vorbeibewegt werden kann.

Bei einem weiteren Ausführungsbeispiel des Fahrzeugdaches (nicht dargestellt) ist bei der Viergelenklagerung des vorderen Dachteils 3 auch der hintere Lenker 15 am vorstehenden Abschnitt des Tragarms 21 vor der Dachfläche 23 des mittleren Dachteils 4 gelagert, so daß der insbesondere gebogen oder gekröpft gebildete hintere Lenker 15 entsprechend der Anordnung, wie sie aus der DE 199 62 070 A1 oder der DE 199 34 673 C1 bekannt ist, vor und über der Dachfläche 23 des mittleren Dachteils 4 verschwenkt wird und eine beschriebene Vertiefung 31 nicht erforderlich ist. Die Antriebseinrichtung oder die Antriebseinrichtungen kann bzw. können entsprechend den voranstehenden Ausführungen gebildet sein.

Generell können statt der dargestellten Lagerungen mit Viergelenken auch Mehrgelenkeinrichtungen mit mehr als vier Gelenken verwendet werden.

### Bezugszeichenliste

- 1: Fahrzeugdach
- 2: Cabriolet
- 3: vorderes Dachteil
- 4: mittleres Dachteil
- 5: hinteres Dachteil
- 6: vordere Sitzreihe
- 7: hintere Sitzreihe
- 8: Windlauf
- 9: A-Säule
- 10: Verdeckkasten
- 11: Verdeckraumklappe
- 12: Hauptlenker
- 13: Hauptsäule
- 14: vorderer Lenker
- 15: hinterer Lenker
- 16: vorderer Hebel
- 17: hinterer Hebel
- 18: Lagerarm
- 19: Hutablage
- 20: Hebelgetriebe
- 21: Tragarm
- 22: Vorderrand
- 23: Dachschale
- 24: Seitenbereich
- 25: vordere Koppelstange
- 26: hinteres Gelenk
- 27: vorderes Gelenk
- 28: Gelenk
- 29: Gelenk
- 30: Hinterrand
- 31: Vertiefung
- 32: Mittelabschnitt
- 33: Seitenabschnitt
- 34: Lagerteil
- 35: Vertiefung
- 36: Mittelabschnitt
- 37: Seitenabschnitt
- 38: Blende
- 39: Dichtung
- 40: Blende
- 41: hintere Drehachse
- 42: Vorderende
- 43: Nase
- 44: hinteres Gelenk
- 45: vorderes Gelenk
- 46: Winkelhebel
- 47: erster Schenkel
- 48: Gelenk
- 49: zweiter Schenkel
- 50: Gelenk
- 51: Verbindungshebel
- 52: Gelenk
- 53: Antriebsstange
- 54: Gelenk
- 55: Gelenk
- 56: Gelenk
- 57: Hinterrand
- 58: Vorderrand
- 59: Gelenk
- 60: Gelenk
- 61: Antriebseinrichtung
- 62: Schwenkhebel
- 63: Vorderrand
- 64: Gelenk
- 65: Antriebseinrichtung
- 66: Feder
- 67: Hinterende

## Patentansprüche

1. Fahrzeugdach mit zumindest einem vorderen ersten Dachteil (3) und einem sich anschließenden zweiten Dachteil (4), die zwischen einer den Fahrzeuginnenraum überdeckenden Schließstellung und einer den Fahrzeuginnenraum freigebenden Ablagestellung in einem heckseitigen Dachablageraum (10) verstellbar sind, wobei das vordere Dachteil (3) mittels jeweils einer seitlich angeordneten Mehrgelenkeinrichtung (14, 15) am zweiten Dachteil (4) bewegbar gelagert und beim Ablegen über das zweite (4) Dachteil anhebbar ist, und
wobei ein hinterer Lenker (15) der Mehrgelenkeinrichtung (14. 15) am zweiten Dachteil (4) um eine von dessen Vorderrand (22) zurückversetzte Schwenkachse (29) schwenkbar gelagert ist und beim Ablegen des Daches (1) aus der Dachfläche (23) des zweiten Dachteils (4) nach oben ausschwenkt,
**dadurch gekennzeichnet,**
**daß** der hintere Lenker (15) in Schließstellung in einer sich nach oben öffnenden Vertiefung (31) im zweiten Dachteil (4) aufgenommen ist.

2. Fahrzeugdach nach Anspruch 1,
**dadurch gekennzeichnet, daß** ein vorderer Lenker (14) der Mehrgelenkeinrichtung (14, 15) in einem Gelenk (44) schwenkbar gelagert ist, das an einem am zweiten Dachteil (4) nach vorne vorstehenden Tragarm (21) vor der Dachfläche (23) des zweiten Dachteils (4) angeordnet ist.

3. Fahrzeugdach nach Anspruch 1 oder 2,
**dadurch gekennzeichnet, daß** der hintere Lenker (15) in Schließstellung des Daches (1) bündig zur Dachfläche (23) des zweiten Dachteils (4) oder unterhalb der Dachfläche (23) angeordnet ist.

4. Fahrzeugdach nach einem der Ansprüche 1 bis 3,
**dadurch gekennzeichnet, daß** der hintere Lenker (15) in zurückgeschwenkter Offenstellung zumindest teilweise in den Hinterabschnitt der Vertiefung (31) abgesenkt ist.

5. Fahrzeugdach nach einem der Ansprüche 1 bis 4,
**dadurch gekennzeichnet, daß** die Vertiefung (31) zwischen einem Mittelteil (32) und einem Seitenteil (33) des zweiten Dachteils (4) angeordnet ist.

6. Fahrzeugdach nach einem der Ansprüche 1 bis 5,
**dadurch gekennzeichnet, daß** in Schließstellung des Daches (1) eine Blende (40) den Hinterabschnitt der Vertiefung (31) vom hinteren Lenker (15) nach hinten hin abdeckt.

7. Fahrzeugdach nach Anspruch 6.
**dadurch gekennzeichnet, daß** die Blende (40) durch den verschwenkenden hinteren Lenker (15) in die Vertiefung (31) herabgedrückt wird.

8. Fahrzeugdach nach Anspruch 6 oder 7,
**dadurch gekennzeichnet, daß** die Blende (40) an ihrem Hinterende an dem zweiten Dachteil (4) befestigt ist und an ihrem Vorderende (42) durch einen rückseitigen Vorsprung (43) des verschwenkenden hinteren Lenkers (15) in die Vertiefung (31) herabgedrückt wird.

9. Fahrzeugdach nach einem der Ansprüche 1 bis 8.
**dadurch gekennzeichnet, daß** der hintere Lenker (15) am Hinterende (67) des vorderen Dachteils (3) angelenkt ist.

10. Fahrzeugdach nach einem der Ansprüche 1 bis 9
**dadurch gekennzeichnet, daß** der vordere Lenker (14) der Mehrgelenkeinrichtung (14, 15) in seiner zurückgeschwenkten Offenstellung in den Vorderabschnitt der Vertiefung (31) abgesenkt ist.

11. Fahrzeugdach nach einem der Ansprüche 1 bis 10,
**dadurch gekennzeichnet,**
**daß** der vordere Lenker (14) über ein Hebelgetriebe (20) angetrieben ist.

12. Fahrzeugdach nach Anspruch 11,
**dadurch gekennzeichnet, daß** das Hebelgetriebe (20) mit einem Hauptschwenkantrieb zum Ablegen des Daches zwangsgekoppelt ist oder einen eigenen Antrieb aufweist.

13. Fahrzeugdach nach Anspruch 11 oder 12,
**dadurch gekennzeichnet, daß** der vordere Lenker (14) über eine Antriebsstange (25) und ein zwischengeschaltetes Hebelgetriebe (20) angetrieben ist, das einen am zweiten Dachteil (4) um eine fixe Schwenkachse schwenkbaren Anlenkhebel (46) in einer solchen Anordnung aufweist, daß ein größerer Antriebshebelarm bei gleichbleibender oder reduzierter Antriebsbewegung der Antriebsstange (25) bereitgestellt ist.

14. Fahrzeugdach nach einem der Ansprüche 11 bis 13,
**dadurch gekennzeichnet, daß** der vordere Lenker (14) über eine Antriebsstange (25) und ein zwischengeschaltetes Hebelgetriebe (20) angetrieben ist, das einen am zweiten Dachteil (4) um eine fixe Schwenkachse (48) schwenkbaren Anlenkhebel (46) aufweist, an dem die Antriebsstange (25) angelenkt ist, wobei die fixe Schwenkachse (48) des Anlenkhebels (46) derart angeordnet ist, daß zumindest in einer der beiden Endlagen der Schwenkbewegung des vorderen Lenkers (14) der bezogen auf die Antriebsstange (25) seitliche Abstand der Schwenkachse (48) vom Anlenkpunkt (27) der Antriebsstange (25) am Anlenkhebel (46) größer ist wie der seitliche Abstand des Gelenks (44) des vorderen Lenkers (14) vom Anlenkpunkt (27) der Antriebsstange (25) am Anlenkhebel (46).

15. Fahrzeugdach nach einem der Ansprüche 1 bis 14,
**dadurch gekennzeichnet, daß** es drei Dachteile (3, 4, 5) aufweist, das zweite oder mittlere Dachteil (4) über eine Mehrgelenkeinrichtung (12, 13) an der Karosserie schwenkbar gelagert ist und das dritte oder hintere Dachteil (5) über eine Mehrgelenkeinrichtung (16, 17) an dem mittleren Dachteil (4) oder dessen karosserieseitiger Lagerung schwenkbar gelagert ist.

## Claims

1. Vehicle roof having at least a front first roof part (3) and an adjacent second roof part (4), which can be displaced between a closed position covering the vehicle interior and a stored position, exposing the vehicle interior, in a roof storage space (10) at the rear, the front roof part (3) being mounted on the second roof part (4) such that it can move by means of a multi-link device (14, 15) arranged on the sides in each case and being able to be raised above the second roof part (4) as it is stored, and
a rear link (15) of the multi-link device (14, 15) being mounted on the second roof part (4) such that can it can pivot about a pivot axis (29) set back from its front edge (22) and, as the roof (1) is stored, pivoting out upwards from the roof surface (23) of the second roof part (4),
**characterized in that**
in the closed position, the rear link (15) is accommodated in a depression (31) in the second roof part (4) that is open at the top.

2. Vehicle roof according to Claim 1, **characterized in that** a front link (14) of the multi-link device (14, 15) is pivotably mounted in a joint (44) which is arranged on a supporting arm (21) projecting forwards on the second roof part (4), in front of the roof surface (23) of the second roof part (4).

3. Vehicle roof according to Claim 1 or 2, **characterized in that,** in the closed position of the roof (1), the rear link (15) is arranged flush with the roof surface (23) of the second roof part (4) or below the roof surface (23).

4. Vehicle roof according to one of Claims 1 to 3, **characterized in that**, in the pivoted-back open position, the rear link (15) is at least partly lowered into the rear section of the depression (31).

5. Vehicle roof according to one of Claims 1 to 4, **characterized in that** the depression (31) is arranged between a central part (32) and a side part (33) of the second roof part (4).

6. Vehicle roof according to one of Claims 1 to 5, **characterized in that**, in the closed position of the roof (1), a screen (40) covers the rear section of the depression (31) from the rear link (15) towards the rear.

7. Vehicle roof according to Claim 6, **characterized in that** the screen (40) is pressed down into the depression (31) by the pivoting rear link (15).

8. Vehicle roof according to Claim 6 or 7, **characterized in that**, at its rear edge, the screen (40) is fixed to the second roof part (4) and, at its front edge (42), is pressed down into the depression (31) by a projection (43) on the rear side of the pivoting rear link (15).

9. Vehicle roof according to one of Claims 1 to 8, **characterized in that** the rear link (15) is attached to the rear end (67) of the front roof part (3).

10. Vehicle roof according to one of Claims 1 to 9, **characterized in that**, in its pivoted-back open position, the front link (14) of the multi-link device (14, 15) is lowered into the front section of the depression (31).

11. Vehicle roof according to one of Claims 1 to 10, **characterized in that** the front link (14) is driven by a lever mechanism (20).

12. Vehicle roof according to Claim 11, **characterized in that** the lever mechanism (20) is positively coupled to a main pivoting drive for storing the roof or has a dedicated drive.

13. Vehicle roof according to Claim 11 or 12, **characterized in that** the front link (14) is driven via a drive rod (25) and an interposed lever mechanism (20), which has an attachment lever (46) that can be pivoted on the second roof part (4) about a fixed lever axis in an arrangement such that a greater drive lever arm is provided with a constant or reduced drive movement of the drive rod (25).

14. Vehicle roof according to one of Claims 11 to 13, **characterized in that** the front link (14) is driven via a drive rod (25) and an interposed lever mechanism (20), which has an attachment lever (46) that can be pivoted on the second roof part (4) about a fixed pivot axis (48) and to which the drive rod (25) is attached, the fixed pivot axis (48) of the attachment lever (46) being arranged in such a way that, at least in one of the two end positions of the pivoting movement of the front link (14), the lateral spacing of the pivot axis (48) from the attachment point (27) of the drive rod (25) on the attachment lever (46) in relation to the drive rod is greater than the lateral spacing of the joint (44) of the front link (14) from the attachment point (27) of the drive rod (25) to the attachment lever (46).

15. Vehicle roof according to one of Claims 1 to 14, **characterized in that** it has three roof parts (3, 4, 5), the second or central roof part (4) is pivotably mounted on the body via a multi-joint device (12, 13), and the third or rear roof part (5) is pivotably mounted via a multi-joint device (16, 17) on the central roof part (4) or its mounting on the body side.

## Revendications

1. Toit de véhicule avec au moins une première partie de toit (3), avant et une deuxième partie de toit (4) lui faisant suite, qui sont mobiles entre une position fermée recouvrant l'habitacle du véhicule et une position escamotée, dégageant l'habitacle, dans un compartiment arrière (10) de rangement de toit, la partie de toit avant (3) étant montée à déplacement sur la deuxième partie de toit (4) au moyen d'un système polyarticulé (14, 15) disposé latéralement et pouvant être soulevée au-dessus de la deuxième partie de toit (4) lors de l'escamotage, et un bras articulé arrière (15) du système polyarticulé (14, 15) étant monté à pivotement sur la deuxième partie de toit (4) autour d'un axe de pivotement (29) en retrait par rapport à son bord avant (22) et, lors de l'escamotage du toit (1), pivotant vers le haut hors de la surface de toit (23) de la deuxième partie de toit (4), **caractérisé en ce que** le bras articulé arrière (15) est, en position fermée, reçu dans la deuxième partie de toit (4) dans un renfoncement (31) s'ouvrant vers le haut.

2. Toit de véhicule selon la revendication 1, **caractérisé en ce qu'**un bras articulé avant (14) du système polyarticulé (14, 15) est monté à pivotement dans une articulation (44) qui est disposée sur un bras porteur (21) dépassant vers l'avant sur la deuxième partie de toit (4) devant la surface de toit (23) de la deuxième partie de toit (4).

3. Toit de véhicule selon la revendication 1 ou 2, **caractérisé en ce que** le bras articulé arrière (15) est, en position fermée du toit (1), disposé à fleur de la surface de toit (23) de la deuxième partie de toit (4) ou en dessous de la surface de toit (23).

4. Toit de véhicule selon l'une des revendications 1 à 3, **caractérisé en ce que** le bras articulé arrière (15) est, en position ouverte ramenée par pivotement, abaissé au moins partiellement dans la partie arrière du renfoncement (31).

5. Toit de véhicule selon l'une des revendications 1 à 4, **caractérisé en ce que** le renfoncement (31) est disposé entre une partie médiane (32) et une partie latérale (33) de la deuxième partie de toit (4).

6. Toit de véhicule selon l'une des revendications 1 à 5, **caractérisé en ce que**, en position fermée du toit (1), un cache (40) recouvre la partie arrière du renfoncement (31) depuis le bras articulé arrière (15) vers l'arrière.

7. Toit de véhicule selon la revendication 6, **caractérisé en ce que** le cache (40) est enfoncé dans le renfoncement (31) par le bras articulé arrière (15) qui pivote.

8. Toit de véhicule selon la revendication 6 ou 7, **caractérisé en ce que** le cache (40) est fixé à son extrémité arrière sur la deuxième partie de toit (4) et, à son extrémité avant (42) est enfoncé dans le renfoncement (31) par une saillie arrière (43) du bras articulé arrière (15) qui pivote.

9. Toit de véhicule selon l'une des revendications 1 à 8, **caractérisé en ce que** le bras articulé arrière (15) est articulé à l'extrémité arrière (67) de la partie de toit avant (3).

10. Toit de véhicule selon l'une des revendications 1 à 9, **caractérisé en ce que** le bras articulé avant (14) du système polyarticulé (14, 15) est, dans sa position ouverte ramenée par pivotement, abaissé dans la partie avant du renfoncement (31).

11. Toit de véhicule selon l'une des revendications 1 à 10, **caractérisé en ce que** le bras articulé avant (14) est entraîné au moyen d'une transmission à leviers (20).

12. Toit de véhicule selon la revendication 11, **caractérisé en ce que** la transmission à leviers (20) est en accouplement forcé avec un entraînement principal en pivotement pour l'escamotage du toit, ou présente un propre entraînement.

13. Toit de véhicule selon la revendication 11 ou 12, **caractérisé en ce que** le bras articulé avant (14) est entraîné par l'intermédiaire d'une tige d'entraînement (25) et d'une transmission à leviers intercalée (20) qui présente un levier d'articulation (46), pouvant pivoter autour d'un axe de pivotement fixe sur la deuxième partie de toit (4), dans une disposition telle qu'on dispose d'un plus grand bras de levier d'entraînement pour un mouvement d'entraînement identique ou réduit de la tige d'entraînement (25).

14. Toit de véhicule selon l'une des revendications 11 à 13, **caractérisé en ce que** le bras articulé avant (14) est entraîné par l'intermédiaire d'une tige d'entraînement (25) et d'une transmission à leviers intercalée (20) qui présente un levier d'articulation (46) pouvant pivoter autour d'un axe de pivotement fixe (48) sur la deuxième partie de toit (4) et auquel est articulée la tige d'entraînement (25), sachant que l'axe de pivotement fixe (48) du levier d'articulation (46) est disposé de telle sorte que, au moins dans une des deux positions finales du mouvement de pivotement du bras articulé avant (14), la distance latérale, relativement à la tige d'entraînement (25), entre l'axe de pivotement (48) et le point d'articulation (27) de la tige d'entraînement (25) sur le levier d'articulation (46) est plus grande que la distance latérale entre l'articulation (44) du bras articulé avant (14) et le point d'articulation (27) de la tige d'entraînement (25) sur le levier d'articulation (46).

15. Toit de véhicule selon l'une des revendications 1 à 14, **caractérisé en ce qu'**il présente trois parties de toit (3, 4, 5), la deuxième partie de toit (4) ou partie de toit médiane est montée à pivotement sur la carrosserie au moyen d'un système polyarticulé (12, 13), et la troisième partie de toit (5) ou partie de toit arrière est montée à pivotement au moyen d'un système polyarticulé (16, 17) sur la partie de toit médiane (4) ou sur le palier de montage de cette dernière côté carrosserie.
